# EUROPÄISCHE PATENTSCHRIFT

(11) **EP 2 540 432 B1**
(45) Veröffentlichungstag und Bekanntmachung des Hinweises auf die Patenterteilung: **29.07.2015**
(21) Anmeldenummer: 11171537.1
(22) Anmeldetag: 27.06.2011
(51) Int. Cl.: B23K 26/14

(54) **Laserbearbeitungsmaschine mit austauschbarer Komponente**
Laser processing machine with exchangeable components
Machine de traitement au laser dotée de composants échangeables

(43) Veröffentlichungstag der Anmeldung: 02.01.2013
(73) Patentinhaber: Trumpf Maschinen AG, 6340 Baar (CH)
(72) Erfinder: Meindl, Ulrich, 71111 Waldenbuch (DE); Felber, Armin, 8580 Hefenhofen (CH); Tweitmann, Mathias, 8820 Wädenswil (CH); Vonaesch, Jonas, 6004 Luzern (CH)
(74) Vertreter: Kohler Schmid Möbus Patentanwälte

(56) Entgegenhaltungen:
- WO-A2-2009/076496
- DE-A1- 10 130 875
- JP-A- 2003 025 176
- JP-A- 2004 322 127

## Beschreibung

Die vorliegende Erfindung betrifft eine Laserbearbeitungsmaschine mit einer lösbar an der Laserbearbeitungsmaschine befestigten, austauschbaren Komponente, sowie mit einer Steuereinheit zur Steuerung eines Bearbeitungsprozesses, welche ausgebildet ist, anhand von statischen, historischen und/oder dynamischen Kenndaten der austauschbaren Komponente die Eignung der Komponente für den Bearbeitungsprozess zu prüfen, wobei an der Komponente mindestens eine Kennzeichnung angebracht ist, welche aus einer Codierung besteht, die der Komponente eineindeutig zugeordnet ist, d.h. welche die Komponente eindeutig identifiziert, und wobei die Laserbearbeitungsmaschine eine Detektoreinheit zur optischen Erfassung der Kennzeichnung aufweist.

Eine solche Laserbearbeitungsmaschine ist aus der JP 2004 322127 A bekannt geworden.

Um die Produktivität von Laserbearbeitungsmaschinen zu erhöhen und eine unbeaufsichtigte (mannlose), automatisierte Fertigung zu ermöglichen, werden Wechseleinrichtungen zum automatischen Auswechseln von Schneiddüsen, Düsenhaltern (mit und ohne Düse) oder Bearbeitungsköpfen eingesetzt. Bisher kann jedoch nicht immer sichergestellt werden, dass manuell oder automatisiert eingewechselte Düsen, Düsenhalter bzw. Bearbeitungsköpfe den notwendigen Vorgaben für eine prozesssichere Materialbearbeitung - beispielsweise hinsichtlich ihres Verschieißzustands oder der Einstellung der optischen Komponentenentsprechen.

Aus der JP 2004322127 A ist es bekannt, eine Laserschneiddüse oder einen Teil des Bearbeitungskopfs, nämlich den Linsenhalter, mit einem Identifizierungscode (z.B. einem Barcode) zu versehen. In diesem Code sind die charakteristischen Merkmale des markierten Werkzeugs (z.B. Düsendurchmesser, Linsenbrennweite) enthalten, außerdem Zustandsinformationen und Informationen über die Benutzungshistorie. Mit einem Lese/Schreibkopf werden die Informationen aufgebracht oder ausgelesen und an die Maschinensteuerung übertragen. Die Maschinensteuerung prüft, ob die Düse bzw. der Linsenhalter zu der gewählten Bearbeitung passt. Wenn nicht, wird eine Fehlermeldung ausgegeben.

Aus der DE 10130875 A1 ist eine Linsenhalter-Wechseleinrichtung mit integrierter kamerabasierter Sensorik bekannt. Parallel zur Bearbeitung eines Werkstücks unter Verwendung eines ersten Linsenhalters kann mit Hilfe der Kamera der Zustand der Linse eines zweiten Linsenhalters geprüft und diese ggf. gereinigt oder ausgetauscht werden.

Die DE 44 97 993 C2 beschreibt eine Stanzpresse mit einem automatischen Stanzwerkzeugwechselsystem, bei dem für jedes Stanzwerkzeug Stanzwerkzeug-Informationen gespeichert werden. Diese Informationen können feste Daten und Fortschreibedaten aufweisen, wobei die festen Daten in dem Stanzwerkzeug selbst und die Fortschreibedaten in der numerischen Steuereinheit der Stanzpresse gespeichert werden können. Die festen Daten können z.B. die Produktionsnummer und das Herstelldatum des Stanzwerkzeugs umfassen und in einer Strichcodemarkierung codiert werden, die an dem Stanzwerkzeug vorgesehen ist. Ein Managementsystem zum automatischen Zuordnen bzw. Auswählen eines Werkzeugs für das Plasmaschneiden aus einer Werkzeuggruppe in einem Werkzeugmagazin mittels eines Produktionssteuerungscomputers ist in der JP 04331036 A beschrieben.

Das Speichern von werkzeugspezifischen Kenndaten an einem auswechselbaren Werkzeug bzw. Werkzeughalter durch Anbringen eines Datenträgers in Form eines fest eingebauten elektrisch löschbaren Speichers (EEPROM) ist durch die DE 33 26 615 A1 bekannt geworden. Die DE 101 18 034 B4 beschreibt eine Werkzeugmaschine, bei der Mittel zur Codierung verschiedenartiger in einen Werkzeughalter einsetzbarer Werkzeuge vorhanden sind, wobei die Werkzeugmaschine einen Sensor aufweist, mit dem die Codierung detektierbar ist.

Aus der DE 10 2007 024 288 B3 ist eine Anordnung zur Erkennung einer Laserbearbeitungsdüse beim Einsetzen in einen Laserbearbeitungskopf bekannt geworden. Die Laserbearbeitungsdüse weist an ihrem in den Laserbearbeitungskopf einsetzbaren Bereich eine Profilierung auf und es sind Mittel zur Erfassung oder Abtastung der Profilierung vorgesehen.

Die WO 2009/076496 A2 offenbart ein System, welches ein Schneidwerkzeug mit einem integrierten RFID-Chip sowie ein Schreib-/Lesegerät zum Beschreiben und zum Auslesen des RFID-Chips aufweist.

### Aufgabe der Erfindung

Demgegenüber stellt sich der vorliegenden Erfindung die Aufgabe, eine Laserbearbeitungsmaschine sowie ein Betriebsverfahren zur Materialbearbeitung bereitzustellen, bei denen der Informationsfluss bezüglich austauschbarer Komponenten einfacher und sicherer gestaltet ist.

### Gegenstand der Erfindung

Diese Aufgabe wird erfindungsgemäß gelöst durch eine Laserbearbeitungsmaschine, der eingangs genannten Art, bei welcher die Steuereinheit ausgebildet bzw. programmiert ist, anhand der Kennzeichnung die Kenndaten der austauschbaren Komponente aus einer Speichereinrichtung auszulesen, bei welcher die Detektoreinheit eine Beleuchtungseinrichtung und eine Kamera aufweist, und bei welcher die Detektoreinheit zur zusätzlichen Erfassung eines Bereichs einer Oberseite eines Werkstücks für die Erfassung von Parametern des Bearbeitungsprozesses und/oder zur zusätzlichen Erfassung von Bildern der austauschbaren Komponente zur Bestimmung eines Zustandes der austauschbaren Komponente anhand der erfassten Bilder ausgebildet bzw. programmiert ist.

Die an der austauschbaren Komponente angebrachte Kennzeichnung umfasst nur die Codierung, die der Komponente eineindeutig zugeordnet ist. Die Kennzeichnung kann daher klein, kompakt und immer gleich groß ausgebildet werden, was vorteilhaft für das prozesssichere Auslesen der Kennzeichnung ist. Eine kompakte Kennzeichnung ist insbesondere bei Komponenten günstig, bei denen die für die Anbringung der Kennzeichnung zur Verfügung stehende Fläche klein ist, z.B. an einer Laserbearbeitungsdüse. Außerdem können kleinere Codierungen einfacher geschützt (z.B. versenkt) an der austauschbaren Komponente angebracht werden und sind dann erheblich unempfindlicher gegen Beschädigungen. Die gleiche Codierung kann, wenn genug Platz vorhanden ist, auch in Form von zwei oder mehr Kennzeichnungen an der Komponente angebracht werden, so dass die Information auch dann prozesssicher ausgelesen kann, wenn eine einzelne Kennzeichnung beschädigt oder verschmutzt ist.

Der erfindungsgemäße Lösungsansatz stellt ein durchgängiges Managementsystem für alle relevanten statischen, dynamischen und historischen Kenndaten von austauschbaren Komponenten einer Laserbearbeitungsmaschine dar, das wesentlich auf der Verwendung einer Codierung beruht, welche der Komponente eineindeutig zugeordnet ist, so dass die Komponente zweifelsfrei identifiziert werden kann. Diese eineindeutige Zuordnung der Codierung ermöglicht es, alle relevanten Kenndaten der austauschbaren Komponente aus einer Datenbank auszulesen, so dass keine Kenndaten auf der austauschbaren Komponente selbst gespeichert werden müssen.

Die Laserbearbeitungsmaschine umfasst eine Detektoreinheit zur optischen Erfassung der Kennzeichnung. Die Kennzeichnung kann durch ein Beschriftungsverfahren (z.B. Laserbeschriftung, DotPeening, Laseranlassen, Lasergravur) oder mittels beschrifteter Klebefolien mit Codierungen (z.B. DataMatrix Codes) an der Komponente angebracht werden. Ein Auslesen der Kennzeichnung erfolgt typischer Weise optisch. Wird eine Kennzeichnung in Form einer Profilierung verwendet, kann diese ggf. auch durch Antasten erfasst bzw. ausgelesen werden.

Die Detektoreinheit ist zur zusätzlichen Erfassung von Parametern des Bearbeitungsprozesses und/oder zur Erfassung eines Zustandes der austauschbaren Komponente ausgebildet. Hierbei kann die Detektoreinheit in einer ersten Funktion zur Erfassung von Bearbeitungsparametern, z.B. der Lage des zu bearbeitenden, in der Regel plattenartigen Werkstücks, zur Erfassung der Schnittkanten an dem Werkstück bei einer schneidenden Bearbeitung und/oder zur Inspektion bzw. zur Überwachung des Zustands der austauschbaren Komponente, beispielsweise zur Düseninspektion, genutzt werden. In einer zweiten Funktion kann die Detektoreinheit zum Auslesen der Codierung bzw. der Kennzeichnung dienen.

Die Detektoreinheit weist eine Beleuchtungseinrichtung und eine Kamera auf. Die Beleuchtungseinrichtung dient typischer Weise der Beleuchtung des Bereichs der austauschbaren Komponente, an dem die Kennzeichnung angebracht ist. Dieser Bereich wird von der Kamera erfasst, um die Kennzeichnung auszulesen. Gegebenenfalls ist zur Erfassung der Kennzeichnung eine Änderung des Strahlengangs der Kamera und/oder des Strahlengangs der Beleuchtungseinrichtung gegenüber einem Strahlengang erforderlich, bei dem Parameter des Bearbeitungsprozesses, z.B. die Lage des Werkstücks, mittels der Detektoreinheit erfasst werden. Die Beleuchtung mittels der Beleuchtungseinrichtung kann beispielsweise ringförmig, schräg oder diffus z.B. bei einer Wellenlänge von etwa 660 nm erfolgen, um eine gleichmäßige Ausleuchtung der Codierung ohne Schattenwurf zu erreichen und Störeinflüsse durch Umgebungslicht zu minimieren. Es versteht sich, dass der Strahlengang der Kamera ggf. so gewählt werden kann, dass er zumindest teilweise mit dem Strahlengang des Laserbearbeitungskopfs übereinstimmt.

Wie weiter oben beschrieben wurde, kann hierbei die ggf. an oder neben dem Bearbeitungskopf angebrachte Detektoreinheit, welche die Kamera und die Beleuchtungseinrichtung umfasst, zur Erfassung mindestens eines weiteren Parameters (z.B. zur Erfassung der Blechlage in der Laserbearbeitungsmaschine, zur Erfassung der Qualität der Schnittkanten, zur Düseninspektion, etc.) dienen und zusätzlich in einer zweiten Funktion zum Auslesen der Codierung genutzt werden. Beispielsweise kann mit Hilfe der Bewegungsachsen der Laserbearbeitungsmaschine die Detektoreinheit zu einem Magazin für auszuwechselnde Komponenten verfahren werden, wo die Codierung mit Hilfe der Beleuchtungsvorrichtung beleuchtet und mit Hilfe der Kamera erfasst wird.

In einer Ausführungsform ist die austauschbare Komponente eine Laserbearbeitungsdüse, ein Düsenhalter für eine Laserbearbeitungsdüse oder ein Laserbearbeitungskopf. Die Düse und/oder der Düsenhalter und/oder der Bearbeitungskopf sind hierbei jeweils mit einer eineindeutigen Codierung versehen. Es versteht sich, dass unterschiedliche Typen von Komponenten, welche auf unterschiedliche Art und Weise bzw. an unterschiedlichen Orten lösbar mit der Laserbearbeitungsmaschine verbunden werden, über die Art bzw. den Ort der Anbringung voneinander unterscheidbar sind und daher ggf. für unterschiedliche Arten von Komponenten eine identische Codierung verwendet werden kann. So kann ggf. für einen Laserbearbeitungskopf und eine Düse dieselbe Codierung verwendet werden, falls die in der Speichereinrichtung hinterlegte Datenbank so ausgelegt ist, dass Datensätze, die unterschiedliche Typen von Komponenten zugeordnet sind, voneinander unterscheidbar sind. Günstiger ist es aber, wenn sich die Codierungen aller mit der Laserbearbeitungsmaschine lösbar verbindbaren, austauschbaren Komponenten voneinander unterscheiden. Es ist außerdem möglich, eine austauschbare Komponente, die aus mehreren codierten Einzelkomponenten zusammengesetzt ist, mit einer Gruppencodierung zu versehen.

Die statischen Kenndaten der austauschbaren Komponente hängen vom Typ der Komponente ab. Bei einer Bearbeitungsdüse können die statischen Kenndaten beispielsweise den Düsendurchmesser umfassen, beim Bearbeitungskopf die Brennweite einer dort angeordneten Linse bzw. den Bearbeitungskopftyp (Spiegelschneidkopf oder Linsenschneidkopf). Zusätzlich werden während der Nutzung von Düse, Düsenhalter oder Bearbeitungskopf individuelle "historische" Betriebskenndaten (z.B. Einsatzdauer, Zahl der Kollisionen, Schnittlänge (in m) in welchem Material und welcher Materialdicke, genutzte Technologiedaten, letzte Justage der Düsenmittigkeit, Kalibrierwert der Abstandsregelung, Wechselhäufigkeit der Schneiddüsen, usw.) durch die Maschinensteuerung erfasst und gespeichert, wobei der Zugriff über die eineindeutige Codierung erfolgt. Zusätzlich können Sensorsysteme Bild- und/oder Messdaten ("dynamische Kenndaten", z.B. Verschmutzungsgrad der Düse, Beschädigungen an der Düse, Linsenzustand, Laserstrahlprofil, Verschmutzungen des Gases im Strahlengang, Schneidgasdruck, Gasgemisch, Schnittkantenqualität, Gratbildung an der Schnittkante) ermitteln, die ebenfalls in der Speichereinrichtung bzw. Datenbank in einem Datensatz gespeichert werden, welcher durch die eineindeutige Codierung genau einer austauschbaren Komponente zugeordnet ist. Einer Gruppierung von austauschbaren Komponenten können ebenfalls spezielle statische, historische und dynamische Kenndaten (z.B. gemeinsame Einsatzdauer) zugeordnet werden.

In einer Weiterbildung weist die Laserbearbeitungsmaschine eine Kenndaten-Bestimmungseinheit zur Bestimmung von dynamischen Kenndaten der austauschbaren Komponente anhand der erfassten Parameter des Bearbeitungsprozesses und/oder des Zustandes der austauschbaren Komponente auf. Anhand der mittels der Detektoreinheit erfassten Parameter des Bearbeitungsprozesses kann auf den Zustand der austauschbaren Komponente geschlossen werden und/oder der Zustand der austauschbaren Komponente kann unmittelbar durch die Detektoreinheit erfasst werden. Der Zustand der Komponente, z.B. der Verschmutzungsgrad, kann ggf. bereits selbst ein dynamisches Kenndatum der austauschbaren Komponente darstellen, welches unter Verwendung der Codierung in der Speichereinrichtung bzw. der Datenbank abgelegt werden kann.

In einer Ausführungsform ist die Detektoreinheit mit einem Laserbearbeitungskopf der Laserbearbeitungsmaschine bewegungsgekoppelt bzw. am Laserbearbeitungskopf selbst angebracht. Wird die Detektoreinheit gemeinsam mit dem Bearbeitungskopf verfahren, so hat dies den Vorteil, dass sich der Bearbeitungskopf beim Auslesen der Codierung bereits in der Nähe der auszuwechselnden Komponente befindet, so dass Nebenzeiten durch weitere Verfahrbewegungen minimiert werden können. Die Detektoreinheit kann hierbei an einer Maschinenkomponente, z.B. einem Träger, angebracht werden, welche bei der Bewegung des Laserbearbeitungskopfs mit bewegt wird. Die Bewegungskopplung lässt sich auf besonders einfache Weise realisieren, wenn die Detektoreinheit am Laserbearbeitungskopf selbst angebracht ist.

Sind beispielsweise mehrere Schneiddüsen in einem Magazin eines Düsenwechslers abgelegt, welcher am Rand des Bearbeitungsbereichs angeordnet ist, kann die Codierung vorteilhafter Weise am oberen Rand bzw. an einer von oben einsehbaren Ebene der Düse angebracht werden. Vor dem Einschrauben der einzuwechselnden Düse kann die Codierung in diesem Fall durch die Kamera, welche den oberen Düsenrand bzw. die einsehbare Ebene erfasst, detektiert werden. Die Kenndaten der Düse können anhand der erfassten Codierung aus der Datenbank ausgelesen werden und mit Hilfe der Steuerungseinrichtung kann die Eignung der ausgewählten Düse für den durchzuführenden Bearbeitungsprozess erkannt und ggf. die Bearbeitungsparameter individuell an die ausgewählte Düse angepasst werden.

Außerdem kann der Bearbeitungskopf vorteilhafter Weise dazu genutzt werden, Verschmutzungen an der Kennzeichnung bzw. der Codierung mit Hilfe eines Prozessgases abzublasen. In diesem Fall wird der Bearbeitungskopf im Bereich der einzuwechselnden Komponente angeordnet und der Schneidgasstrom wird gezielt auf den Bereich der einzuwechselnden Komponente gerichtet, an dem die Kennzeichnung angebracht ist.

Bei einer Ausführungsform weist die Detektoreinheit mindestens einen in den Detektorstrahlengang einbringbaren Umlenkspiegel auf, der bevorzugt parallel und/oder senkrecht zur Werkstückoberfläche verschiebbar ist. Der Umlenkspiegel kann in den Detektorstrahlengang ein- oder ausgebracht werden, beispielsweise um wahlweise mit der Kamera den bzw. die weiteren Parameter oder die Codierung zu erfassen. Es versteht sich, dass der Umlenkspiegel zu diesem Zweck oder ggf. zur wahlweisen Erfassung von mehreren an unterschiedlichen Orten positionierten Codierungen auch im Detektorstrahlengang bewegt, insbesondere im Detektorstrahlengang verschoben werden kann.

Bei einer Ausführungsform umfasst die Laserbearbeitungsmaschine zusätzlich eine Wechseleinrichtung zum automatisierten Wechseln der austauschbaren Komponente. Hierbei kann es sich beispielsweise um einen Düsenwechsler, eine Wechseleinrichtung für einen Laserbearbeitungskopf oder für einen austauschbaren Düsenhalter handeln. Die Wechseleinrichtung ist hierbei ausgebildet, die auszuwechselnde Komponente von der Laserbearbeitungsmaschine zu trennen, indem die Verbindung gelöst wird, und die auszuwechselnde Komponente an einem freien Platz eines Magazins abzulegen. So kann beispielsweise eine Bearbeitungsdüse, welche durch eine Schraubverbindung mit dem Laserbearbeitungskopf verbunden ist, mittels einer Wechseleinrichtung, welche einen Drehantrieb aufweist, aus dem Bearbeitungskopf heraus geschraubt werden. Nachfolgend wird eine einzuwechselnde Komponente aus dem Magazin entnommen und lösbar, z.B. durch Schrauben oder dergleichen, mit der Laserbearbeitungsmaschine verbunden.

In einer Weiterbildung weist die Wechseleinrichtung mindestens einen Umlenkspiegel zur Umlenkung eines Detektorstrahlengangs einer Detektoreinheit zur austauschbaren Komponente auf. Der Umlenkspiegel kann hierbei derart angeordnet sein, dass bei einer Bewegung der Detektoreinheit in den Bereich der Wechseleinrichtung der Detektorstrahlengang auf den Umlenkspiegel trifft und an diesem zur austauschbaren Komponente umgelenkt wird. Dies ermöglicht die Erfassung der Kennzeichnung und/oder die Erfassung eines Zustands der austauschbaren Komponente beim Wechseln der Komponente. Es versteht sich, dass der Umlenkspiegel der Wechseleinrichtung ggf. beweglich, z.B. verschwenkbar, verkippbar und/oder verschiebbar sein kann, um mit Hilfe der Detektoreinheit unterschiedliche Positionen an der austauschbaren Komponente erfassen zu können.

Bei einer weiteren Ausführungsform umfasst die Laserbearbeitungsmaschine eine Prognoseeinrichtung, welche ausgebildet bzw. programmiert ist, anhand der Kenndaten der austauschbaren Komponente und anhand von Parametern des Bearbeitungsprozesses die voraussichtliche Nutzungsdauer und/oder die Dauer eines Wartungsintervalls der austauschbaren Komponente zu bestimmen. Die Prognoseeinrichtung kann anhand der erfassten Kenndaten, insbesondere der historischen Kenndaten, eine Prognose über die (maximale) Zeitdauer erstellen, während der die Komponente noch für den Bearbeitungsprozess geeignet ist. Beispielsweise kann hierbei eine Prognose über die Nutzungsdauer einer Düse in Abhängigkeit von Schneidparametern und Material des zu schneidenden Werkstücks erfolgen. Die Prognoseeinrichtung bzw. das Prognosemodul kann hierbei auch noch auf weitere Daten wie Werkstoff, Materialdicke, Beschichtungen, Werkstückcodierung, Technologiedaten der Laserbearbeitungsmaschine, etc. zugreifen und diese für die Prognose auswerten. Das Erfassen von Verschmutzungsgraden und die Korrelation dieser Daten mit der zu schneidenden Blechdicke, Schneidgas, Blechbeschichtungen und Technologiedaten erlauben über das Prognosemodul das automatisierte Festlegen von Reinigungszyklen für die austauschbare Komponente, beispielsweise für die Reinigung von transmissiven optischen Elementen (Linsen etc.) eines austauschbaren Laserbearbeitungskopfs.

In einer weiteren Ausführungsform ist die Steuereinheit ausgebildet bzw. programmiert, mindestens einen Parameter des Bearbeitungsprozesses in Abhängigkeit von den Kenndaten der austauschbaren Komponente anzupassen. Zu diesem Zweck können die in der Datenbank gespeicherten Kenndaten, ggf. in Verbindung mit zusätzlich erfassten (dynamischen) Kenndaten mit Vorgabewerten für die Prozessführung verglichen und entsprechend bewertet werden. Ergibt sich hierbei, dass die ermittelten Werte sich außerhalb von Vorgaben oder Toleranzbereichen befinden, werden entsprechende Meldungen oder Korrekturen an die Maschinensteuerung gesandt. So kann beispielsweise aufgrund des detektierten Verschmutzungsgrades der Düse ein Reinigungsvorgang eingeleitet werden, oder es können Schneidparameter wie z.B. die Vorschubgeschwindigkeit und die Laserleistung aufgrund des Verschmutzungsgrades der Linse im Laserschneidkopf angepasst werden. Wird eine Beschädigung an der Düse erkannt, kann anhand des Schadensbildes (z.B. Beschädigung nah am Düsenaustritt, Düsendurchmesser deformiert, usw.) über den Austausch der Düse entschieden werden.

Bei einer weiteren Ausführungsform umfasst die Laserbearbeitungsmaschine eine Speichereinrichtung zum Speichern der Kenndaten und/oder eine Schnittstelle zum Übertagen der Kenndaten zwischen einer externen Speichereinrichtung und der Laserbearbeitungsmaschine. Die Speicherung der Kenndaten kann direkt in einer Speichereinrichtung der Laserbearbeitungsmaschine und/oder in einer externen Speichereinrichtung, z.B. in einem externen Computer erfolgen. Werden die Kenndaten sowohl in der Laserbearbeitungsmaschine als auch extern gespeichert, sollte ein Datenabgleich bzw. eine Synchronisierung zwischen den an den jeweiligen Orten gespeicherten Kenndaten erfolgen. Der externe Computer kann sich beim Maschinenanwender oder aber auch beim Maschinenhersteller befinden. Auch eine Speicherung der Daten auf einem Computer bzw. Server im Internet ist möglich. Eine externe Speicherung der Kenndaten erlaubt eine Auswertung der Kenndaten von mehreren Laserbearbeitungsmaschinen zur Optimierung von Bearbeitungsprozessen in einer zentralen übergeordneten Prognoseeinrichtung. Den einzelnen Laserbearbeitungsmaschinen werden so optimierte Prozessparameter zur Verfügung gestellt.

Ein zweiter Aspekt der Erfindung betrifft ein Verfahren zum Betrieb einer Laserbearbeitungsmaschine, welche eine lösbar an der Laserbearbeitungsmaschine befestigte, austauschbare Komponente aufweist, das Verfahren umfassend: Erfassen einer an der austauschbaren Komponente angebrachten Kennzeichnung, welche aus einer Codierung besteht, die der Komponente eineindeutig zugeordnet ist; Auslesen von statischen, historischen und/oder dynamischen Kenndaten der austauschbaren Komponente aus einer Speichereinrichtung anhand der Kennzeichnung; Prüfen der Eignung der austauschbaren Komponente für den Bearbeitungsprozess anhand der ausgelesenen Kenndaten, sowie Durchführen des Bearbeitungsprozesses, sofern die Komponente für den Bearbeitungsprozess geeignet ist.

Insbesondere wenn das Erfassen der Kennzeichnung bzw. das Auslesen der Codierung in einer schmutzigen Arbeitsumgebung (mit Staub bzw. Spritzern) erfolgt, ist es wesentlich, dass die austauschbare Komponente mit einer möglichst einfachen Codierung versehen ist. Dies wird erfindungsgemäß dadurch erreicht, dass die Codierung allein für die eineindeutige Zuordnung und damit für die Identifizierung der austauschbaren Komponente genutzt wird, während alle weiteren Kenndaten nicht auf der auswechselbaren Komponente selbst gespeichert werden. Die Codierung kann demzufolge klein sein und kann daher auch an kleinen Bauteilen wie Schneiddüsen angebracht werden. Außerdem ist eine solche Codierung einfach und schnell durch die Detektoreinheit auslesbar.

Bei einer Variante wird vor dem Durchführen des Bearbeitungsprozesses mindestens ein Parameter des Bearbeitungsprozesses in Abhängigkeit von den Kenndaten der austauschbaren Komponente angepasst. Ergibt sich anhand der Kenndaten, dass die Durchführung des Bearbeitungsprozesses mit Standard-Parametern nicht im gewünschten Toleranzbereich möglich ist, kann die Maschinensteuerung angepasst werden, um eine Bearbeitung zu erreichen, die innerhalb des Toleranzbereichs liegt. So kann beispielsweise als Parameter eines Laserschneidprozesses die Vorschubgeschwindigkeit reduziert werden, um auch bei z.B. verschmutzter oder beschädigter Düse noch eine gewünschte Schneidqualität sicherzustellen.

In einer Variante werden beim Auslesen die Kenndaten der austauschbaren Komponente von einer externen Speichereinrichtung an die Laserbearbeitungsmaschine übertragen. Wie bereits weiter oben im Zusammenhang mit der Laserbearbeitungsmaschine beschrieben wurde, kann die Datenbank in einer zentralen Speichereinrichtung gebildet sein, auf die durch Datenfernübertragung, z.B. durch ein Firmennetzwerk oder über das Internet zugegriffen werden kann.

Weitere Vorteile der Erfindung ergeben sich aus der Beschreibung und den Zeichnungen. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Ausführungsform einer erfindungsgemäßen Laserbearbeitungsmaschine,
- Fig. 2: eine schematische Darstellung eines Laserbearbeitungskopfs mit einer Laserbearbeitungsdüse als austauschbarer Komponente sowie mit einer Detektoreinheit, und
- Fig. 3: eine perspektivische Darstellung einer Laserbearbeitungsdüse.

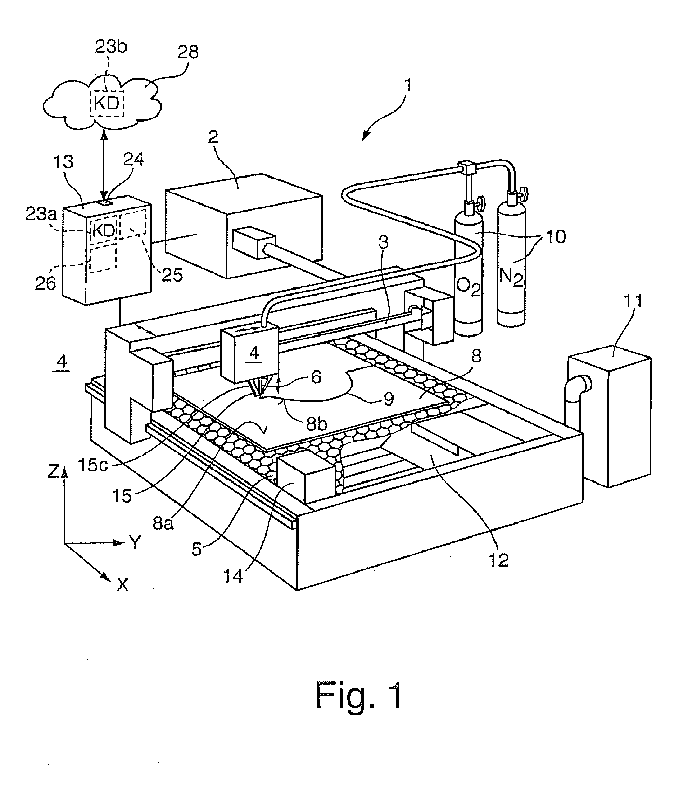

Fig. 1 zeigt den Aufbau einer Laserschneidmaschine als Ausführungsbeispiel einer Laserbearbeitungsmaschine 1. Weitere Ausführungsbeispiele sind eine Laserschweißmaschine oder eine kombinierte Stanz-/Laserschneidmaschine. Die Laserbearbeitungsmaschine 1 weist einen CO₂-Laser oder Festkörperlaser (Scheibenlaser oder Faserlaser) als Laserstrahlerzeuger 2, einen Laserbearbeitungskopf 4 und eine Werkstückauflage 5 auf, die in Fig. 1 nur schematisch dargestellt sind. Ein von dem Laserresonator 2 erzeugter Laserstrahl 6 wird mittels einer Strahlführung 3 von (nicht gezeigten) Umlenkspiegeln oder mit Hilfe eines Lichtleitkabels zum Laserbearbeitungskopf 4 geführt und in diesem fokussiert sowie mit Hilfe von ebenfalls nicht bildlich dargestellten Spiegeln senkrecht zur Oberfläche 8a eines Werkstücks 8 ausgerichtet, d.h. die Strahlachse (optische Achse) des Laserstrahls 6 verläuft senkrecht zum Werkstück 8. Alternativ kann der Laserstrahlerzeuger 2 auch auf einer der Bewegungsachsen der Laserbearbeitungsmaschine 1 mitfahrend angeordnet sein. Die Strahlführung und Fokussierung des Laserstrahls 6 im Laserbearbeitungskopf 4 kann über Linsen und /oder Spiegel erfolgen.

Zum Laserschneiden des Werkstücks 8 wird mit dem Laserstrahl 6 zunächst eingestochen, d.h. das Werkstück 8 wird an einer Stelle punktförmig aufgeschmolzen oder oxidiert und die hierbei entstehende Schmelze wird ausgeblasen. Nachfolgend wird der Laserstrahl 6 über das Werkstück 8 bewegt, so dass ein durchgängiger Schnittspalt 9 entsteht, an dem entlang der Laserstrahl 6 das Werkstück 8 durchtrennt. Der Schnittspalt 9 wird von zwei Schnittflächen 8b besäumt.

Sowohl das Einstechen als auch das Laserschneiden können durch Hinzufügen eines Gases unterstützt werden. Als Schneidgase 10 können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden. Entstehende Partikel und Gase können mithilfe einer Absaugeinrichtung 11 aus einer Absaugkammer 12 abgesaugt werden.

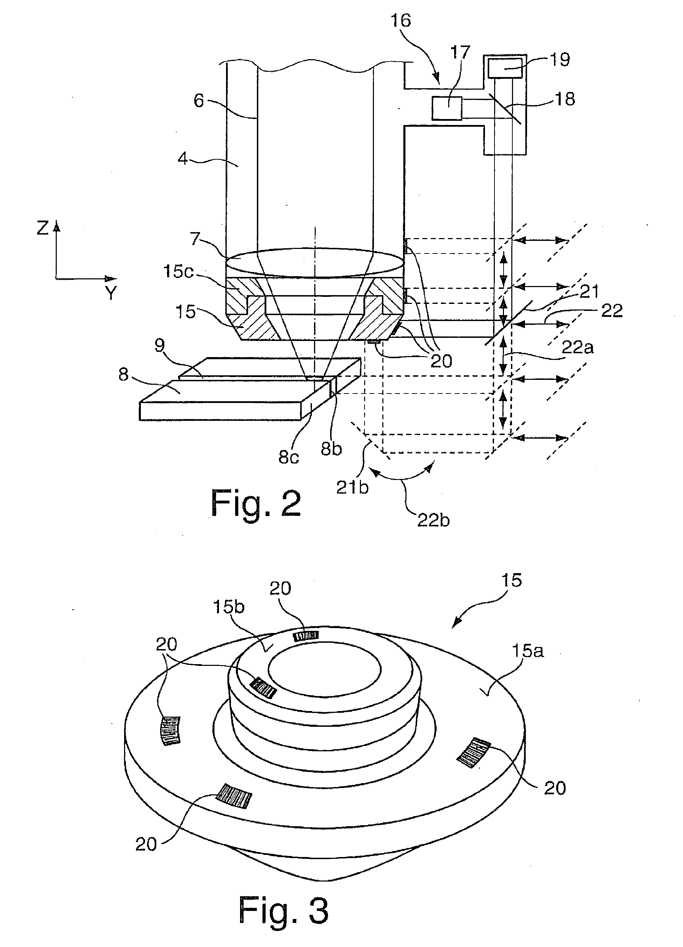

Eine Steuerungseinrichtung 13 übernimmt hierbei die Steuerung des Bearbeitungsprozesses, im vorliegenden Beispiel des Laserschneidprozesses. Es versteht sich, dass gegebenenfalls auch andere Bearbeitungsprozesse, z.B. Laserschweißen, mit der Laserbearbeitungsmaschine 1 durchgeführt werden können. Am Rand der Werkstückauflage 5 ist ein Düsenwechsler 14 angeordnet, welcher zum Austausch einer an dem Laserbearbeitungskopf 4 vorgesehenen Laserbearbeitungsdüse 15 dient, die in Fig. 2 im Detail dargestellt ist. Alternativ oder zusätzlich kann die Wechseleinrichtung 14 auch zum Wechseln des Laserbearbeitungskopfs 4 oder eines Düsenhalters 15c vorgesehen sein.

Die Laserbearbeitungsdüse 15, die in einem Düsenhalter 15c gehalten wird, ist im Strahlengang des Laserstrahls 6 nach einer Fokussierlinse 7 bzw. einem Fokussierspiegel angeordnet, welche(r) der Fokussierung des Laserstrahls auf einen Fokuspunkt auf dem Werkstück 8 dient. Die Fokussierlinse 7 kann zusätzlich auch zum Druckaufbau für das der Laserbearbeitungsdüse 15 über (nicht gezeigte) Zuführungskanäle zugeführte Schneidgas 10 dienen. Bei der Verwendung eines Fokussierspiegels stellt hingegen typischer Weise eine Blende den Druckaufbau in der Strahlführung des Laserbearbeitungskopfes 4 sicher.

In Fig. 2 ebenfalls zu erkennen ist eine an dem Laserbearbeitungskopf 4 angebrachte Detektoreinrichtung 16. Die Detektoreinrichtung 16 weist eine Beleuchtungseinrichtung in Form einer Lichtquelle 17 auf, über die kollimierte Beleuchtungsstrahlung mit Wellenlängen, die typischer Weise im sichtbaren Bereich liegen (z.B. bei einer Wellenlänge von etwa 660 nm), zunächst senkrecht zur Strahlachse des Laserstrahls (d.h. in Y-Richtung) und nach Umlenkung an einem teildurchlässigen Spiegel 18 in Strahlrichtung des Laserstrahls (d.h. in Z-Richtung) auf das Werkstück 8 eingestrahlt wird. Eine Kamera 19, welche hinter dem teildurchlässig ausgebildeten Spiegel 18 angebracht ist, dient der Erfassung eines Bildes des von der Lichtquelle 17 ausgeleuchteten Bereichs des Werkstücks 8. Die Beleuchtung kann alternativ auch beispielsweise ringförmig schräg oder diffus erfolgen, um eine gleichmäßige Ausleuchtung ohne Schattenwurf zu erreichen sowie Störeinflüsse durch Umgebungslicht zu minimieren.

Ein weiterer Umlenkspiegel 21 ist mittels einer nicht näher beschriebenen Verschiebeeinrichtung 22, z.B. in Form eines Linearantriebes, zwischen einer ersten Stellung, in welcher der Umlenkspiegel 21 außerhalb des Strahlengangs der Lichtquelle angeordnet ist, und einer zweiten Stellung parallel zur Werkstückoberfläche 8a verschiebbar, in welcher der Umlenkspiegel 21 im Strahlengang der Lichtquelle 17 angeordnet ist und die Beleuchtungsstrahlung zur Laserbearbeitungsdüse 15 hin umlenkt. In der ersten, in Fig. 2 gestrichelt dargestellten Stellung wird mit der Detektoreinheit 16 ein Bereich an der Oberseite des Werkstücks 8 erfasst, um einen oder mehrere Prozessparameter zu erfassen.

Im vorliegenden Beispiel können mit der Detektoreinheit 16 z.B. Konturen an dem Werkstück 8 identifiziert werden, welche dazu dienen können, die genaue Lage des Werkstücks 8 zu ermitteln. Wird die in Fig. 2 gezeigte Vorschubrichtung (positive Y-Richtung) bei der Bearbeitung des Werkstücks 8 umgekehrt, so dass der Laserbearbeitungskopf 4 in negativer Y-Richtung verschoben wird, kann die Detektoreinheit 16 beispielsweise auch zur Bestimmung der Qualität und/oder der Breite des Schnittspalts 9 verwendet werden.

In der zweiten, in Fig. 2 mit einer durchgezogenen Linie dargestellten Stellung des Umlenkspiegels 21 wird ein Bereich am umlaufenden äußeren Rand der Laserbearbeitungsdüse 15 beleuchtet und von der Kamera 19 erfasst. Bei dieser Erfassung kann der Zustand der Laserbearbeitungsdüse 15 im Hinblick auf Verschmutzungen beurteilt werden. Gleichzeitig kann die Detektoreinheit 16 hierbei eine am umlaufenden Rand der Laserbearbeitungsdüse 15 angebrachte Kennzeichnung 20 erfassen, welche aus einer Codierung besteht, die der Laserbearbeitungsdüse 15 eineindeutig zugeordnet ist, d.h. welche die in den Laserbearbeitungskopf 4 eingesetzte Laserbearbeitungsdüse 15 eindeutig identifiziert.

Mit einer ebenfalls nicht näher beschriebenen Verschiebeeinheit 22a sind vertikale Bewegungen (in Z-Richtung) des Umlenkspiegels 21 möglich. Es kann ein weiterer Umlenkspiegel 21 b vorgesehen sein, der entweder an der Detektoreinheit 16 (ggf. in den Detektorstrahlengang mittels einer Verschwenkeinrichtung 22b einschwenkbar) oder in bzw. an der Wechseleinrichtung 14 oder neben der Wechseleinrichtung 14 am Rand der der Werkstückauflage 5 angebracht ist. Die vertikale Bewegung des Umlenkspiegels 21 sowie die zusätzliche Umlenkung des Detektorstrahlengangs am Umlenkspiegel 21 b erlauben das Erfassen von Kennzeichnungen 20 an unterschiedlichen Komponenten und Positionen des Laserbearbeitungskopfs 4. Außerdem kann beispielsweise die Unterseite der Düse 15 auf Verschmutzungen oder Beschädigungen untersucht werden. Auch eine Untersuchung des Schnittspalts 9 sowie der Schnittfläche 8b bzw. der Stirnseite 8c des Werkstücks 8 ist möglich. Ist der zusätzliche Umlenkspiegel 21 b in, an oder neben der Wechseleinrichtung 14 montiert, so können eine Untersuchung sowie eine Identifikation der Düse auf einfache Weise in einem Arbeitsgang vor oder nach dem Düsenwechsel erfolgen.

Anhand der Kennzeichnung 20 bzw. Codierung kann die Steuerungseinheit 13 der Laserbearbeitungsmaschine 1 (vgl. Fig. 1) statische sowie historische und dynamische Kenndaten KD der Laserbearbeitungsdüse 15 aus einem in der Steuerungseinheit 13 vorgesehenen Speicher 23a auslesen. Die Kenndaten KD sind in dem Speicher 23a in der Form einer Datenbank abgelegt, wobei die Codierung 20 als Schlüssel bzw. als Index für einen jeweiligen Datensatz mit Kenndaten KD dient, die der Laserbearbeitungsdüse 15 zugeordnet sind.

Bei den statischen Kenndaten KD kann es sich z.B. um Daten handeln, welche den Typ der Laserbearbeitungsdüse 15 charakterisieren und z.B. den Düsendurchmessers etc. angeben. Als historische Kenndaten können beispielsweise die Anzahl der Kollisionen der Laserbearbeitungsdüse 15, der Zeitpunkt der letzten Justage der Düsenmittigkeit etc. in der Speichereinrichtung 23a gespeichert werden. Die dynamischen Kenndaten können sich z.B. auf den momentanen Verschmutzungszustand und/oder Beschädigungen an der Laserbearbeitungsdüse 15 beziehen.

Zusätzlich zur Speichereinrichtung 23a, welche in der Steuereinheit 13 zur numerischen Steuerung des Bearbeitungsprozesses angeordnet ist, ist auch eine weitere, externe Speichereinrichtung 23b zur Speicherung der Kenndaten KD der Laserbearbeitungsdüse 15 vorgesehen, mit der die Steuereinheit 13 über eine Schnittstelle 24 Daten austauschen kann. Beispielsweise kann sich die externe Speichereinrichtung 23a auf einem externen Computer befinden, über den mittels eines Netzwerks 28, beispielsweise das Internet oder über ein Firmennetzwerk zugegriffen werden kann. Es versteht sich, dass bei der Speicherung der Kenndaten KD an zwei unterschiedlichen Orten ein Datenabgleich bzw. eine Synchronisation erfolgen sollte. Es versteht sich weiterhin, dass alternativ die Speicherung der Kenndaten KD auch nur an einem Ort erfolgen kann, d.h. lediglich in dem Speicher 23a der Steuereinheit 13 bzw. der Laserbearbeitungsmaschine 1 oder in dem externen Speicher 23b.

Während bei dem in Fig. 2 gezeigten Vorgehen die Laserbearbeitungsdüse 15 erst identifiziert wird, sobald diese mit dem Laserbearbeitungskopf 4 (z.B. manuell) verbunden wurde, ist es alternativ oder zusätzlich auch möglich, die Laserbearbeitungsdüse 15 schon vor dem Einsetzen in den Laserbearbeitungskopf 4 zu identifizieren.

Hierbei kann ausgenutzt werden, dass die Detektoreinheit 16 am Laserbearbeitungskopf 4 angebracht ist und somit gemeinsam mit diesem mit Hilfe der Bewegungsachsen der Laserbearbeitungsmaschine 1 in den Randbereich der Werkstückauflage 5 bewegt werden kann, an dem die Wechseleinrichtung 14 angeordnet ist. Der Düsenwechsler 14 weist ein (nicht bildlich dargestelltes) Magazin auf, in dem eine Mehrzahl von Laserbearbeitungsdüsen angeordnet ist, die für den Düsenwechsel verwendet werden können.

Sind wie in Fig. 3 gezeigt Kennzeichnungen 20 (z.B. in Form von Barcodes, ein-, zwei oder mehrdimensionalen Codes) an der dem Werkstück 8 abgewandten Oberseite 15a der Laserbearbeitungsdüse 15 angebracht, kann bei in der ersten, außerhalb des Strahlengangs befindlichen Stellung des Umlenkspiegels 21 die Detektoreinheit 16 diese Kennzeichnungen 20 erfassen und anhand der hierbei ausgelesenen Codierung vor dem Einschrauben einer im Magazin befindlichen Laserbearbeitungsdüse in den Laserbearbeitungskopf 4 deren zugehörige Kenndaten KD auslesen. Hierbei kann gegebenenfalls das durch die Laserbearbeitungsdüse 15 ausgestoßene Schneidgas 10 genutzt werden, um Verschmutzungen von der Oberseite 15a der Düse 15 bzw. den Kennzeichnungen 20 zu entfernen.

Anhand der (statischen) Kenndaten KD der Düse 15 kann die Steuereinheit 13 entscheiden, ob diese für die gewählte Bearbeitungsaufgabe (hier: Laserschneiden) geeignet ist oder nicht. Für den Fall, dass die im Magazin befindliche Laserbearbeitungsdüse grundsätzlich für den durchzuführenden Bearbeitungsprozess geeignet ist, können zusätzlich die historischen und dynamischen Kenndaten KD herangezogen werden, um zu überprüfen, ob mit der Düse eine gewünschte Bearbeitungsqualität erreicht werden kann oder ob ggf. trotz der grundsätzlichen Eignung der Düse auf einen Einsatz beim durchzuführenden Bearbeitungsprozess verzichtet werden soll.

Insbesondere können auch in einer der Steuereinheit 13 zugeordneten Prognoseeinrichtung 26 (vgl. Fig. 1) anhand der Kenndaten KD der Laserbearbeitungsdüse 15 sowie den in der Steuereinheit 13 ebenfalls vorhandenen Parametern des Bearbeitungsprozesses die voraussichtliche Nutzungsdauer bzw. die Dauer eines Wartungsintervalls der Laserbearbeitungsdüse 15 bestimmt werden. Die Prognoseeinrichtung 26 kann hierbei auf Parameter des Bearbeitungsprozesses wie Werkstoff, Materialdicke, Beschichtungen, Werkstückcodierung, Technologiedaten der Laserbearbeitungsmaschine 1, usw. zugreifen und diese für die Prognose auswerten. Die Korrelation dieser Daten mit der zu schneidenden Blechdicke, Schneidgas, Blechbeschichtungen und Technologiedaten erlauben über das Prognosemodul 26 z.B. das automatisierte Festlegen von Reinigungszyklen.

Hierbei können auch dynamische Kenndaten KD wie der Verschmutzungsgrad der Laserbearbeitungsdüse 15 berücksichtigt werden, welche während des Bearbeitungsprozesses ermittelt werden, beispielsweise indem wie oben beschrieben eine Inspektion der Laserbearbeitungsdüse 15 durchgeführt wird. Anhand der von der Detektoreinheit 16 erfassten Bilder der Laserbearbeitungsdüse 15 kann in einer Kenndaten-Bestimmungseinrichtung 25 der Steuereinheit 13 der Zustand, z.B. der Verschmutzungsgrad, der Düse 15 bestimmt werden und in dem internen Speicher 23a bzw. in dem externen Speicher 23b als ein dynamisches Kenndatum KD abgelegt werden.

Es versteht sich, dass die Steuereinheit 13 anhand der Kenndaten KD der Laserbearbeitungsdüse 15 auch die Parameter des Bearbeitungsprozesses geeignet anpassen kann, z.B. indem die gespeicherten Kenndaten KD mit Vorgabewerten verglichen und entsprechend bewertet werden. Liegen die hierbei ermittelten Parameterwerte außerhalb von Vorgaben oder Toleranzbereichen des Bearbeitungsprozesses, können entsprechende Meldungen oder Korrekturen an die Maschinensteuerung gesandt werden bzw. das verwendete Bearbeitungsprogramm (NC-Programm) kann geeignet angepasst werden, um diese Korrekturen vorzunehmen.

So kann beispielsweise aufgrund des detektierten Verschmutzungsgrades der Düse 15 ein Reinigungsvorgang vorgenommen werden, oder es können Schneidparameter wie z.B. die Vorschubgeschwindigkeit und die Laserleistung aufgrund des Verschmutzungsgrades der Schneidlinse 7 bzw. des Fokussierspiegels angepasst werden, welche einen Teil des (ebenfalls austauschbaren) Laserschneidkopfs 4 bildet. Wird eine Beschädigung an der Düse 15 entdeckt, kann anhand des Schadensbildes (z.B. Beschädigung nah am Düsenaustritt, Düsendurchmesser deformiert, usw.) über den Austausch der Düse 15 entschieden werden.

Es versteht sich, dass zusätzlich oder alternativ zur Laserbearbeitungsdüse 15 auch weitere austauschbare Komponenten der Laserbearbeitungsmaschine 1 auf die oben beschriebene Weise verwaltet werden können, beispielsweise der (austauschbare) Laserschneidkopf 4 oder der Düsenhalter 15c für die Laserbearbeitungsdüse 15. Auf die oben beschriebene Weise kann ein Managementsystem bereitgestellt werden, welches individuell (eineindeutig) codierte Düsen, Düsenhalter und/oder Bearbeitungsköpfe, eine oder mehrere Detektoreinheiten/Lesegeräte zum Auslesen der jeweiligen Codierung, eine Steuerungseinheit, einen Zugriff auf eine Datenbank sowie eine Auswertungs-Software und/oder Auswertungs-Hardware umfasst. Eingebettet ist das Managementsystem in die Laserbearbeitungsmaschine 1 mit Düsenwechsler 14 und Düsenmagazin und/oder Düsenhalterwechsler und Düsenhaltermagazin und/oder Bearbeitungskopfwechsler und Bearbeitungskopfmagazin. Die codierten Düsen und/oder Düsenhalter und/oder Bearbeitungsköpfe werden hierbei einem jeweiligen Magazin gelagert und von der Laserbearbeitungsmaschine 1 nach Bedarf aus diesem entnommen.

Die Düsen 15, Düsenhalter und/oder Bearbeitungsköpfe 4 können hierbei an geeigneten Orten durch ein Beschriftungsverfahren (z.B. Laserbeschriftung, DotPeening, Laseranlassen, Lasergravur) oder mittels beschrifteter Klebefolien mit Kennzeichnungen 20 bzw. Codierungen (z.B. DataMatrix Codes) versehen werden. Um ein sicheres Auslesen der Kennzeichnung und damit eine sichere Identifizierung der jeweiligen austauschbaren Komponente durch eine optische Erfassung auch in einer schmutzigen Umgebung (Staub bzw. Spritzer) zu ermöglichen, ist es wesentlich, dass die austauschbaren Komponenten einen möglichst einfachen Code tragen, was dadurch erreicht wird, dass die Kennzeichnung 20 lediglich aus einer Codierung besteht, die der austauschbaren Komponente eineindeutig zuordenbar ist. Die Codierung kann vergleichsweise klein sein und ist daher auch an kleinen Bauteilen wie der Schneiddüse 15 anbringbar und kann einfach, schnell und insbesondere sicher durch eine optische Erfassung ausgelesen werden. Es versteht sich, dass alternativ oder zusätzlich zu einer optischen Erfassung auch eine Erfassung der Codierung z.B. durch Antasten möglich ist, sofern die Codierung in Form einer Profilierung ausgebildet ist.

## Patentansprüche

1. Laserbearbeitungsmaschine (1), umfassend:
eine lösbar an der Laserbearbeitungsmaschine (1) befestigte, austauschbare Komponente (4, 15),
eine Steuereinheit (13) zur Steuerung eines Bearbeitungsprozesses, die ausgebildet ist, anhand von statischen sowie von historischen und/oder dynamischen Kenndaten (KD) der austauschbaren Komponente (4, 15) die Eignung der Komponente (4, 15) für den Bearbeitungsprozess zu prüfen,
wobei an der Komponente (15) mindestens eine Kennzeichnung (20) angebracht ist, welche aus einer Codierung besteht, die der Komponente (15) eineindeutig zugeordnet ist, wobei die Laserbearbeitungsmaschine (1) eine Detektoreinheit (16) zur optischen Erfassung der Kennzeichnung (20) aufweist,
**dadurch gekennzeichnet,**
**dass** die Steuereinheit (13) ausgebildet ist, anhand der Kennzeichnung (20) die Kenndaten (KD) der austauschbaren Komponente (15) aus einer Speichereinrichtung (23a, 23b) auszulesen,
**dass** die Detektoreinheit (16) eine Beleuchtungseinrichtung (17) und eine Kamera (19) aufweist, und
**dass** die Detektoreinheit (16) zur zusätzlichen Erfassung eines Bereichs einer Oberseite eines Werkstücks (8) für die Erfassung von Parametern des Bearbeitungsprozesses und/oder zur zusätzlichen Erfassung von Bildern der austauschbaren Komponente (4, 15, 15c) zur Bestimmung eines Zustandes der austauschbaren Komponente (4, 15, 15c) anhand der erfassten Bilder ausgebildet ist.

2. Laserbearbeitungsmaschine nach Anspruch 1, bei welcher die austauschbare Komponente eine Laserbearbeitungsdüse (15), ein Düsenhalter (15c) für eine Laserbearbeitungsdüse oder ein Laserbearbeitungskopf (4) ist.

3. Laserbearbeitungsmaschine nach Anspruch 1 oder 2, weiter umfassend:
eine Kenndaten-Bestimmungseinheit (25) zur Bestimmung von dynamischen Kenndaten (KD) der austauschbaren Komponente (4, 15, 15c) anhand der erfassten Parameter des Bearbeitungsprozesses und/oder des Zustandes der austauschbaren Komponente (4, 15, 15c).

4. Laserbearbeitungsmaschine nach einem der vorhergehenden Ansprüche, bei welcher die Detektoreinheit (16) mit einem Laserbearbeitungskopf (4) der Laserbearbeitungsmaschine (1) bewegungsgekoppelt, insbesondere an dem Laserbearbeitungskopf (4) angebracht, ist.

5. Laserbearbeitungsmaschine nach einem der vorhergehenden Ansprüche, bei welcher die Detektoreinheit (16) mindestens einen in den Detektorstrahlengang einbringbaren, bevorzugt parallel und/oder senkrecht zur Werkstückoberfläche (8a) verschiebbaren Umlenkspiegel (21, 21 b) aufweist.

6. Laserbearbeitungsmaschine nach einem der vorhergehenden Ansprüche, weiter umfassend: eine Wechseleinrichtung (14) zum automatisierten Wechseln der austauschbaren Komponente (4, 15, 15c).

7. Laserbearbeitungsmaschine nach Anspruch 6, bei welcher die Wechseleinrichtung (14) mindestens einen Umlenkspiegel (21 b) zur Umlenkung eines Detektorstrahlengangs einer Detektoreinheit (16) zu der austauschbaren Komponente (4, 15, 15c) aufweist.

8. Laserbearbeitungsmaschine nach einem der vorhergehenden Ansprüche, weiter umfassend: eine Prognoseeinrichtung (26), welche ausgebildet ist, anhand der Kenndaten (KD) der austauschbaren Komponente (4, 15, 15c) und anhand von Parametern des Bearbeitungsprozesses die voraussichtliche Nutzungsdauer und/oder die Dauer eines Wartungsintervalls der austauschbaren Komponente (4, 15, 15c) zu bestimmen.

9. Laserbearbeitungsmaschine nach einem der vorhergehenden Ansprüche, bei welcher die Steuereinheit (13) ausgebildet ist, mindestens einen Parameter des Bearbeitungsprozesses in Abhängigkeit von den Kenndaten (KD) der austauschbaren Komponente (4, 15, 15c) anzupassen.

10. Laserbearbeitungsmaschine nach einem der vorhergehenden Ansprüche, welche eine Speichereinrichtung (23a) zum Speichern der Kenndaten (KD) und/oder eine Schnittstelle (24) zum Übertagen der Kenndaten (KD) zwischen einer externen Speichereinrichtung (23b) und der Laserbearbeitungsmaschine (1) aufweist.

## Claims

1. A laser processing machine (1), comprising:
an exchangeable component (4, 15) detachably fastened to the laser processing machine (1),
a control unit (13) for controlling a processing procedure that is designed to check the suitability of the component (4, 15) for the processing procedure based on static, as well as historic and/or dynamic key data (KD) of the component (4, 15), wherein at least one label (20) is affixed to the component (15), which consists of a coding that is uniquely allocated to the component (15), wherein the laser processing machine (1) contains a detector unit (16) for optical recording of the label (20),
**characterised in that**
the control unit (13) is designed to read out the key data (KD) of the exchangeable component (15) from a storage device (23a, 23b) based on the label (20),
the detector unit (16) has an illuminating device (17) and a camera (19),
and that the detector unit (16) is designed for additionally capturing an area on the top of a workpiece (8) for recording parameters of the processing procedure and/or for additionally capturing images of the exchangeable component (4, 15,15c) to determine the condition of the exchangeable component (4, 15, 15c) based on the images captured.

2. A laser processing machine in accordance with claim 1, **characterised in that** the exchangeable component is a laser processing nozzle (15), a nozzle holder (15c) for a laser processing nozzle or a laser processing head (4).

3. A laser processing machine in accordance with claim 1 or 2, further comprising a key data determination unit (25) for determining dynamic key data (KD) of the exchangeable component (4, 15, 15c) based on the parameters of the processing procedure recorded and/or the condition of the exchangeable component (4, 15, 15c).

4. A laser processing machine in accordance with one of the preceding claims, wherein the detector unit (16) is coupled in movement to a laser processing head (4) of the laser processing machine (1), in particular fastened at the laser processing head (4).

5. A laser processing machine in accordance with one of the preceding claims, wherein the detector unit (16) has at least one deflection mirror (21, 21 b) that can be introduced into the detector beam path, preferably being deplaceable parallel and/or perpendicular to the surface of the workpiece (8a).

6. A laser processing machine in accordance with one of the preceding claims, further comprising: a changeover device (14) for automatically changing the exchangeable component (4, 15, 15c).

7. A laser processing machine in accordance with claim 6, **characterised in that** the changeover device (14) possesses at least one deflection mirror (21 b) for deflecting a detector beam path of a detector unit (16) to the exchangeable component (4, 15, 15c).

8. A laser processing machine in accordance with one of the preceding claims, further comprising: a prognosis device (26), which is designed to determine the expected useful life and/or the length of a maintenance interval of the exchangeable component (4, 15, 15c) based on the key data (KD) of the exchangeable component (4, 15, 15c) and based on parameters of the processing procedure.

9. A laser processing machine in accordance with one of the preceding claims, wherein the control unit (13) is designed to adjust at least one parameter of the processing procedure, depending upon the key data (KD) of the exchangeable component (4, 15, 15c).

10. A laser processing machine in accordance with one of the preceding claims, which has a storage device (23a) for saving the key data (KD) and/or an interface (24) for transmitting the key data (KD) between an external storage device (23b) and the laser processing machine (1).

## Revendications

1. Machine d'usinage au laser (1), comprenant :
un composant échangeable (4, 15) fixé de manière détachable à la machine d'usinage au laser (1),
une unité de commande (13) pour commander un processus d'usinage, laquelle est conçue pour contrôler l'aptitude du composant (4, 15) au processus d'usinage à l'aide de données caractéristiques (KD) statiques et historiques et/ou dynamiques du composant échangeable (4, 15),
au moins un marquage (20) étant apposé sur le composant (15), lequel se compose d'un codage qui est associé de façon univoque au composant (15), la machine d'usinage au laser (1) présentant une unité de détection (16) pour détecter optiquement le marquage (20),
**caractérisée en ce**
**que** l'unité de commande (13) est conçue pour lire, à partir du marquage (20), les données caractéristiques (KD) du composant échangeable (15) dans un dispositif mémoire (23a, 23b),
**que** l'unité de détection (16) présente un dispositif d'éclairage (17) et une caméra (19), et
**que** l'unité de détection (16) est conçue pour détecter en plus une zone d'une face supérieure d'une pièce (8) pour la détection de paramètres du processus d'usinage et/ou pour détecter en plus des images du composant échangeable (4, 15, 15c) pour déterminer un état du composant échangeable (4, 15, 15c) à partir des images détectées.

2. Machine d'usinage au laser selon la revendication 1, dans laquelle le composant échangeable est une buse d'usinage au laser (15), un porte-buse (15c) pour une buse d'usinage au laser ou une tête d'usinage au laser (4).

3. Machine d'usinage au laser selon la revendication 1 ou 2, comprenant en outre une unité de détermination de données caractéristiques (25) pour déterminer des données caractéristiques (KD) dynamiques du composant échangeable (4, 15, 15c) à partir des paramètres détectés du processus d'usinage et/ou de l'état du composant échangeable (4, 15, 15c).

4. Machine d'usinage au laser selon l'une des revendications précédentes, dans laquelle l'unité de détection (16) est couplée en déplacement à une tête d'usinage au laser (4) de la machine d'usinage au laser (1), en particulier est montée sur la tête d'usinage au laser (4).

5. Machine d'usinage au laser selon l'une des revendications précédentes, dans laquelle l'unité de détection (16) présente au moins un miroir de déviation (21, 21b) pouvant être placé dans le trajet des rayons du détecteur et de préférence déplaçable parallèlement et/ou perpendiculairement par rapport à la surface de la pièce (8a).

6. Machine d'usinage au laser selon l'une des revendications précédentes, comprenant en outre un dispositif de changement (14) pour le changement automatisé du composant échangeable (4, 15, 15c).

7. Machine d'usinage au laser selon la revendication 6, dans laquelle le dispositif de changement (14) présente au moins un miroir de déviation (21b) pour dévier un trajet des rayons du détecteur d'une unité de détection (16) vers le composant échangeable (4, 15, 15c).

8. Machine d'usinage au laser selon l'une des revendications précédentes, comprenant en outre un dispositif de prévision (26) qui est conçu pour déterminer la durée d'utilisation prévisible et/ou la durée d'un intervalle de maintenance du composant échangeable (4, 15, 15c) à partir des données caractéristiques (KD) du composant échangeable (4, 15, 15c) et à partir de paramètres du processus d'usinage.

9. Machine d'usinage au laser selon l'une des revendications précédentes, dans laquelle l'unité de commande (13) est conçue pour adapter au moins un paramètre du processus d'usinage en fonction des données caractéristiques (KD) du composant échangeable (4, 15, 15c).

10. Machine d'usinage au laser selon l'une des revendications précédentes, laquelle présente un dispositif mémoire (23a) pour mémoriser les données caractéristiques (KD) et/ou une interface (24) pour transmettre les données caractéristiques (KD) entre un dispositif mémoire externe (23b) et la machine d'usinage au laser (1).
